# EUROPÄISCHE PATENTSCHRIFT

(11) **EP 2 018 623 B1**
(45) Veröffentlichungstag und Bekanntmachung des Hinweises auf die Patenterteilung: **31.01.2018**
(21) Anmeldenummer: 07724897.9
(22) Anmeldetag: 04.05.2007
(51) Int. Cl.: G06K 19/077, G06K 7/00

(54) **TRAGBARER DATENTRÄGER SOWIE SYSTEM AUS ENDGERÄT UND TRAGBAREM DATENTRÄGER**
PORTABLE DATA CARRIER AND SYSTEM COMPRISING AN END DEVICE AND A PORTABLE DATA CARRIER
SUPPORT DE DONNÉES PORTATIF ET SYSTÈME COMPOSÉ D'UN TERMINAL ET DU SUPPORT DE DONNÉES PORTATIF

(30) Priorität: 05.05.2006 DE 102006021086
(43) Veröffentlichungstag der Anmeldung: 28.01.2009
(73) Patentinhaber: Giesecke+Devrient Mobile Security GmbH, 81677 München (DE)
(72) Erfinder: BALDISCHWEILER, Michael, 81825 München (DE); HARTEL, Karl, Eglof, 80689 München (DE)
(86) Internationale Anmeldenummer: PCT/EP2007/003972
(87) Internationale Veröffentlichungsnummer: WO 2007/128531

(56) Entgegenhaltungen:
- FR-A1- 2 859 560
- FR-A1- 2 864 292

## Beschreibung

Die vorliegende Erfindung betrifft ein Verfahren zum simultanen Betrieb zweier Schnittstellen eines portablen Datenträgers sowie einen derartigen Datenträger, insbesondere eine Chipkarte, eine sichere Multimediakarte, eine Mobilfunkkarte oder dergleichen.

FR 2 859 560 A1 zeigt eine Chipkarte mit einem Mikrocomputer, einer Kontaktschnittstelle zur Datenübermittlung zwischen einer Kontaktbank und dem Mikrocomputer und einer Luftschnittstelle zur Datenübertragung zwischen wenigstens einer Antenne und dem Mikrocomputer.

Aktuelle Entwicklungen im Bereich portabler Datenträger, wie z.B. Chipkarten und dergleichen, verwenden zum flexibleren Einsatz mehrere physikalisch unabhängige Schnittstellen. Insbesondere können portable Datenträger mit einer herkömmlichen kontaktbehafteten Schnittstelle sowie einer zusätzlichen kontaktlosen Schnittstelle ausgestattet sein, z.B. einer Antenneneinrichtung für eine Funkverbindung. Die eigentliche Datenkommunikation wird dann mittels entsprechender kontaktbehafteter Kommunikationsprotokolle (im Chipkarten- und Mobilfunkbereich z.B. T=0, T=1) und/oder kontaktloser Kommunikationsprotokolle (z.B. T=CL) mit einer externen Kommunikationseinheit durchgeführt, mit der der Datenträger in Kommunikationsverbindung steht.

Sowohl die verfügbaren Betriebs- und Steuersysteme für portable Datenträger mit einer kontaktbehafteten und einer kontaktlosen Schnittstelle als auch die von den vielfältigen Lese- /Schreib- und Kommunikationseinheiten derzeit unterstützten Datenkommunikationsmodi lassen zu einem Zeitpunkt jedoch exklusiv nur eine Datenkommunikation entweder über die kontaktbehaftete oder über die kontaktlose Schnittstelle zu. Dies ist jedoch in solchen Situationen nachteilig, in denen während einer Datenkommunikation über eine der beiden Schnittstellen über die andere Schnittstelle eine weitere Datenkommunikation beginnt, die zu einem späteren Zeitpunkt nicht wiederholbar ist. Ein solches Szenario ist bei einem als Mobilfunkkarte ausgebildeten portablen Datenträger beispielsweise gegeben, wenn über die kontaktbehaftete Schnittstelle ein Mobilfunkgespräch geführt wird und währenddessen über die kontaktlose Schnittstelle eine Bezahltransaktion, z.B. im öffentlichen Personennahverkehr, abgewickelt werden soll. Für andere Typen von portablen Datenträgern sind entsprechende Szenarien denkbar.

Eine naheliegende Lösung dieses Problems ist die Einrichtung eines echtzeitfähigen Multitasking-Betriebssystems auf dem portablen Datenträger, um eine gleichzeitige Datenkommunikation über beide Schnittstellen als nebenläufige, quasiparallele Prozesse zu realisieren. Diese Lösung ist jedoch im Hinblick auf die begrenzten Ressourcen von portablen Datenträgern derzeitig nicht realistisch und vielfach für den normalen Gebrauch solcher Datenträger auch nicht erforderlich.

Die US 6,105,874 offenbart einen portablen Datenträger mit einer kontaktbehafteten und einer kontaktlosen Schnittstelle, der zwischen den beiden Schnittstellen mittels einer ODER-Logik umschaltet. Bei einer gleichzeitigen Aktivität beider Schnittstellen führt die ODER-Verknüpfung jedoch zu Datenverlusten. Die US 6,045,043 offenbart eine Doppelschnittstellenvorrichtung, bei der eine kontaktlose Datenkommunikation begonnen wird, sobald an der kontaktlosen Schnittstelle ein Magnetfeld anliegt, unabhängig vom jeweiligen Zustand der kontaktbehafteten Schnittstelle. Diese Bevorzugung der kontaktlosen Schnittstelle führt jedoch zu Nachteilen im Hinblick auf die Stabilität von kontaktbehafteten Datenkommunikationen.

Gemäß FR 2 864 282 wird ein kontaktbehafteter Reset des Datenträgers verzögert verarbeitet, um eine laufende kontaktlose Kommunikation zunächst abschließen zu können.

In FR 2 859 560 wird vorgeschlagen bei einer laufenden ersten Kommunikation zu einer zweiten Kommunikation zu wechseln, die zuerst abgeschlossen wird, um anschließend die erste Kommunikation abzuschließen. Der Datenträger soll somit jederzeit auf beiden Schnittstellen empfangsbereit sein. Solche Lösungen sind im Detail aber technisch sehr anspruchsvoll und fehleranfällig.

Demzufolge ist es eine Aufgabe der vorliegenden Erfindung, eine kontaktbehaftete und eine kontaktlose Schnittstelle eines portablen Datenträgers simultan und zuverlässig betreiben zu können.

Diese Aufgabe wird erfindungsgemäß durch ein Verfahren gemäß Anspruch 1, ein Sicherheitsmodul gemäß Anspruch 13 und ein System gemäß Anspruch 15 gelöste. Die abhängigen Ansprüche beschreiben vorteilhafte Ausgestaltungen und Weiterbildungen der Erfindung.
In einem Sicherheitsmodul mit einer ersten Schnittstelle und einer zweiten Schnittstelle werden erste Daten über die erste Schnittstelle empfangen und ausgewertet. Abhängig von dem Auswertungsergebnis wird eine Empfangsbereitschaftsphase für den Empfang von Daten über die zweite Schnittstelle ausgeführt oder auch nicht ausgeführt. Eine Antwort des Sicherheitsmoduls auf die empfangenen Daten wird erst nach dem Ausführen der Empfangsbereitschaftsphase für die zweite Schnittstelle über die erste Schnittstelle gesendet.
Weitere Merkmale und Vorteile der Erfindung ergeben sich aus der folgenden Beschreibung verschiedener erfindungsgemäßer Ausführungsbeispiele und Ausführungsalternativen im Zusammenhang mit den begleitenden Zeichnungen. Darin zeigen:
- Figur 1: eine schematische Darstellung einer Chipkarte mit einer kontaktbehafteten und einer kontaktlosen Schnittstelle;
- Figur 2: ein Ablaufdiagramm einer alternativen Sequenzialisierung im T=0-Protokoll;
- Figur 3: ein Ablaufdiagramm eines erfindungsgemäßen Sequenzialisierung.

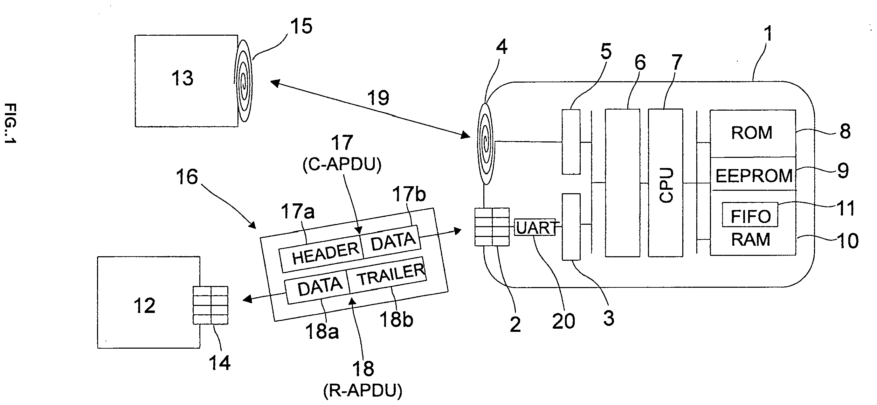

Figur 1 zeigt schematisch einen als Chipkarte 1 ausgebildeten portablen Datenträger mit einem Prozessor 7 (CPU) und einer dreistufigen Speicheranordnung, bestehend aus einem permanenten ROM-Speicher 8, in dem das Betriebssystem der Chipkarte 1 liegt, einem wiederbeschreibbaren EEPROM-Speicher 9 und einem flüchtigen RAM-Arbeitsspeicher 10. Die Chipkarte 1 umfasst desweiteren eine kontaktbehaftete Schnittstelleneinrichtung 2,3, die ein herkömmliches sechs- oder achtfeldriges Kontaktfeld nach ISO 7816 als physikalische Schnittstelle 2 und eine entsprechende Schnittstellensteuerung 3 umfasst. Darüber hinaus umfasst die Chipkarte 1 eine kontaktlose Schnittstelleneinrichtung 4, 5 mit einer kontaktlosen Schnittstelle 4, die als Antenne oder dergleichen eingerichtet sein kann, und einer entsprechenden Schnittstellensteuerung 5.

Die kontaktlose Daten- und Energieübertragung zu/von der Chipkarte 1 kann auf vielfältige Weise realisiert werden, insbesondere als herkömmliche Funk- oder RFID-Verbindung. Die jeweiligen Schnittstellensteuerungen 3,5 steuern den Betrieb der zugehörigen Schnittstellen 2,4 nach vorgegebenen standardisierten Kommunikationsprotokollen. So kann die kontaktbehaftete Schnittstelle 2 beispielsweise gemäß der im Chipkarten- und Mobilfunkbereich üblichen Kommunikationsprotokolle T=0 oder T=1 betrieben werden, während die kontaktlose Schnittstelle 4 zum Beispiel gemäß dem T=CL-Protokoll betrieben wird. Die beiden Schnittstellensteuerungen 3, 5 arbeiten prinzipiell unabhängig voneinander und bearbeiten lediglich diejenige Datenkommunikation 16,19, die über die entsprechende Schnittstelle 2, 4 abgewickelt wird.

Bei simultanen Datenkommunikationen 16,19 an beiden Schnittstellen 2,4 wird eine koordinierende Sequenzialisierung von einer Sequenzialisierungseinrichtung 6 vorgenommen, die den beiden Schnittstelleneinrichtungen 2, 3 und 4, 5 nachgeschaltet ist. Die Sequenzialisierungseinrichtung 6 sequenzialisiert die Abwicklungen der beiden konkurrierenden Datenkommunikationen 16,19, die von den entsprechenden Schnittstelleneinrichtungen 2, 3 und 4, 5 prinzipiell parallel durchgeführt werden müssten, derart, dass zu jedem Zeitpunkt von dem Prozessor 7 immer nur eine der beiden Datenkommunikationen 16,19 bearbeitet wird und trotzdem kein Datenverlust auftritt. Zur Sequenzialisierung bedarf es einer von der Sequenzialisierungseinrichtung 6 koordinierten Kommunikation mit den jeweiligen externen (Funk-) Kommunikationseinheiten 12,13, die mit der Chipkarte 1 die simultane Datenkommunikationen 16,19 betreiben. Sowohl die Schnittstellensteuerungen 3,5 der Schnittstellen 2, 4 als auch die Sequenzialisierungseinrichtung 6 können als Hardwareelemente der Chipkarte 1 ausgestaltet sein oder als Softwarekomponenten, die entweder als Applikationen im EEPROM-Speicher 9 oder als Betriebssystembestandteile im ROM-Speicher 8 abgelegt sind. Bei ihrer Ausführung durch den Prozessor 7 der Chipkarte 1 werden dann entsprechende Prozesse gebildet und abgearbeitet.

Bei der Chipkarte 1 kann es sich prinzipiell um jede beliebige mit einem Prozessor ausgestattete Chipkarte handeln, zum Beispiel um eine Smart-Card, eine sichere Multimediakarte oder eine Mobilfunkkarte, wie z.B. eine GSM-Mobilfunkkarte. Im letztgenannten Fall kommuniziert die GSM-Mobilfunkkarte über die kontaktbehaftete Schnittstelle 2 mit einem Telekommunikationsendgerät/Mobiltelefon, in welches die GSM-Mobilfunkkarte eingesetzt ist, während über die kontaktlose Schnittstelle 4 eine kontaktlose Datenkommunikation mit einer externen Funkkommunikationseinheit durchgeführt werden kann, zum Beispiel einem entsprechend ausgerüsteten Verkaufsterminal oder dergleichen. So werden im Falle einer kontaktbehafteten Kommunikation 16 Kommunikationsdaten 17,18 zwischen der kontaktbehafteten Schnittstelle 2 der Chipkarte 1 und einer entsprechenden kontaktbehafteten Schnittstelle 14 einer externen Kommunikationseinheit 12 ausgetauscht. Ebenso werden bei einer kontaktlosen Datenkommunikation 19 Kommunikationsdaten zwischen der kontaktlosen Schnittstelle 4 und einer entsprechenden kontaktlosen Schnittstelle 15 einer Funkkommunikationseinheit 13 ausgetauscht.

Eine kontaktbehaftete Datenkommunikation 16 der Chipkarte 1 wird bei Verwendung des T=0 oder T=1-Protokolls im Master-Slave-Betrieb mit der externen Kommunikationseinheit 14, z.B. einem Mobilfunkgerät, als aktivem Kommunikationspartner (Master) und der Chipkarte 1 als reaktivem Kommunikationspartner (Slave) durchgeführt, der lediglich auf die Anweisungen der externen Kommunikationseinheit 14 reagiert. Deshalb kann im weiteren davon ausgegangen werden, dass eine kontaktbehaftete Datenkommunikation 16 eine Anweisung 17 der externen Kommunikationseinheit 14 an die Chipkarte 1 und eine anschließende Antwort 18 der Chipkarte 1 an die Kommunikationseinheit 14 umfasst. Anweisungen und Antworten sind hierbei vorzugsweise protokollunabhängig nach ISO 7816 aufgebaut. Die Anweisung 17 ist vorzugsweise als Kommando-APDU (Command-APDU; C-APDU) und die Antwort 18 als Antwort-APDU (Response-APDU; R-APDU) aufgebaut. Sowohl eine C-APDU 17 als auch eine R-APDU 18 entsprechen einem standardisierten Datenformat und umfassen sowohl die eigentlichen Nutzdaten als auch ergänzende Steuerdaten. So besteht eine C-APDU 17 aus führenden Kopfdaten 17a ("Header") und folgenden Nutzdaten 17b, während eine R-APDU 18 aus führenden Nutzdaten 18a und folgenden Schlussdaten 18b ("Trailer") besteht.

Im Rahmen der vorliegenden Erfindung werden lediglich diejenigen technischen Merkmale von Chipkarten, Chipkartenprotokollen und Datenformaten erläutert, die zum Verständnis der Erfindung unmittelbar notwendig sind. Soweit im Folgenden von einer Unterbrechung oder einer Wiederaufnahme einer Datenkommunikation gesprochen wird, ist die Unterbrechung oder Wiederaufnahme der Bearbeitung der Kommunikation durch die SIM-Karte 1 insbesondere durch deren CPU 7 gemeint. Detaillierte und ergänzende technische Zusammenhänge werden im "Handbuch der Chipkarten, 4. Aufl." von W. Rankl und W. Effing beschrieben.

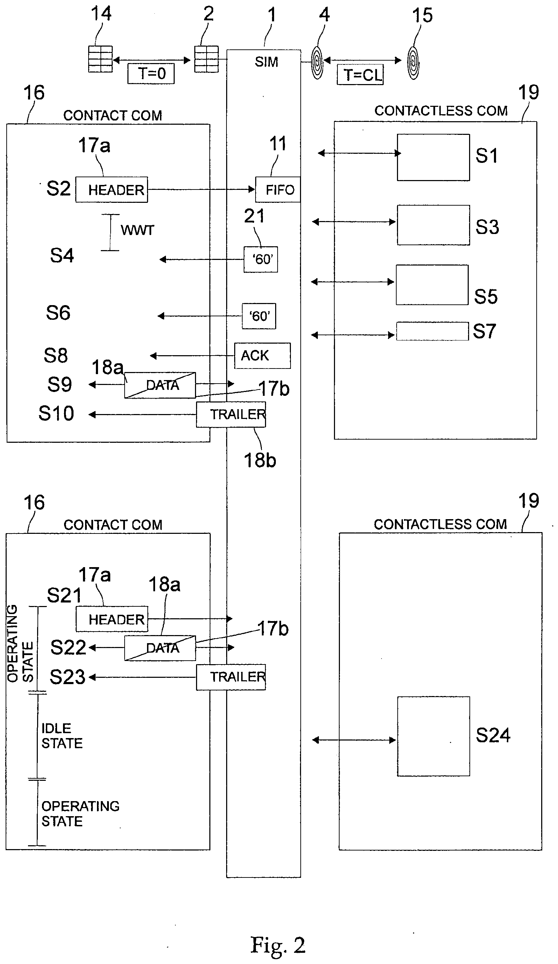

Figur 2 zeigt schematisch die durch die Sequenzialisierungseinrichtung 6 einer SIM-Mobilfunkkarte 1 als bevorzugte Implementierung eines erfindungsgemäßen portablen Datenträgers sequenzialisierte simultane Abarbeitung einer kontaktbehafteten Datenkommunikation 16 (CONTACT COM; Fig. 2. links) über die kontaktbehaftete Schnittstelleneinrichtung 2,3 und einer kontaktlosen Datenkommunikation 19 (CONTACTLESS COM; Fig. 2, rechts) über die kontaktlose Schnittstelleneinrichtung 4,5. Hierbei bilden die Schritte S1 bis S10 (Fig. 2, oben) die Sequenzialisierung einer kontaktbehafteten Datenkommunikation 16, die während einer bereits laufenden kontaktlosen Datenkommunikation 19 einsetzt, während mit den Schritten S21 bis S24 (Fig. 2, unten) eine einfache Sequenzialisierung einer kontaktlosen Datenkommunikation 19 realisiert wird, die einsetzt, während eine kontaktbehaftete Datenkommunikation 16 bereits läuft.

Bei einer kontaktbehafteten Datenkommunikation 16 im Rahmen des T=0-Protokolls sollten die 5 Byte umfassenden Kopfdaten 17a (HEADER) einer empfangenen C-APDU 17 nicht verloren gehen. Deshalb wird zumindest die Bearbeitung einer laufenden kontaktlosen Datenkommunikation (Schritt S1) bei Beginn einer kontaktbehafteten Datenkommunikation 16 unterbrochen. Die von einer externen Kommunikationseinheit 12 gesendeten Kopfdaten 17a werden vollständig empfangen (Schritt S2) und von der Sequenzialisierungseinrichtung 6 z.B. in einem FIFO-Speicher 11 zwischengespeichert, der vorzugsweise im RAM-Speicher 10 der SIM-Karte 1 eingerichtet sein kann. Ebenso können die Kopfdaten 17a auch per Direktspeicherzugriff (DMA; "Direct Memory Access") oder über einen Interrupt in einen hierfür vorgesehenen Speicher oder Speicherbereich der SIM-Karte 1 geschrieben werden, z.B. in den RAM-Arbeitsspeicher 10.

Nach dem vollständigen Empfang der Kopfdaten 17a schaltet die Sequenzialisierungseinrichtung 6 wieder auf die kontaktlose Datenkommunikation 19 um, die dann zumindest weiter geführt (Schritt S3) oder vollständig zu Ende geführt wird.

Eine Unterbrechungszeit WWT ("Work Waiting Time") an der kontaktbehafteten Schnittstelle 2, die die maximale Zeitdauer zwischen den Startflanken zweier aufeinander folgender empfangener Bytes vor Abbruch des Datenempfangs angibt, wird entweder von der Sequenzialisierungseinrichtung 6 oder der Schnittstellensteuerung 3 überwacht. Die SIM-Karte 1 sendet (kurz) vor Ablauf der WWT eine Verlängerungsanfrage 21, beispielsweise in der Form eines so genannten Null-Bytes: '60' als ProcedureByte, über die kontaktbehaftete Schnittstelle 2 an die externe Kommunikationseinheit 14 (Schritt S4). Zu diesem Zweck wird die in Schritt S3 fortgesetzte kontaktlose Datenkommunikation 19 gegebenenfalls wieder unterbrochen und erst anschließend fortgesetzt (Schritt S5).

Es können entsprechend mehrfach Schritte des Sendens von Verlängerungsanfragen (S6) über die kontaktbehaftete Schnittstelle 2 folgen, um die kontaktbehaftete Datenkommunikation 16 aufrecht zu erhalten bis die kontaktlose Datenkommunikation 19 abgeschlossen ist (Schritt S7). Auf diese Weise wird das Quittieren des vollständigen Empfangs der Kopfdaten 17a einer eintreffenden C-APDU durch die Schnittstelleneinheit 3 mittels eines Acknowledge ACK als Procedure Byte (Schritt S8) bis nach Beendigung der kontaktlosen Datenkommunikation 19 verzögert.

Anschließend läuft die nach Eingang der Kopfdaten 17a (Schritt S2) unterbrochene kontaktbehaftete Datenkommunikation 16 protokollgemäß weiter, indem in Schritt S9 der Austausch von Nutzdaten (DATA) stattfindet, also einerseits die Nutzdaten 17b der Kommado-APDU 17 an die SIM-Karte 1 und andererseits die Nutzdaten 18a der Antwort-APDU 18 an die externe Kommunikationseinheit 12 übertragen werden. Abschließend werden auch die Schlussdaten 18b (TRAILER) der Antwort-APDU 18 an die externe Kommunikationseinheit 14 übertragen (Schritt S10). Diese Schlussdaten 18b umfassen beispielsweise die Rückgabekodizes SW1 und SW2 ("return code") der Antwort-APDU 18.

Ist die kontaktlose Datenkommunikation 19 dagegen bereits mit dem Schritt S3 abgeschlossen, so wird der unterbrochene Empfang der Anweisung 17 über die die kontaktbehaftete Schnittstelle 2 mit den Schritten des Sendens S8 der Bestätigung ACK, dem Datenaustausch S9 und dem Übertragen S10 der Schlussdaten 18b fortgesetzt.

Auch der umgekehrte Fall, dass während einer kontaktbehafteten Datenkommunikation 16 eine kontaktlose Datenkommunikation 19 beginnt, kann im Rahmen des T=0-Protokolls sequenzialisiert werden.

In einer ersten, nicht separat in einer Figur dargestellten, Variante wird die Bearbeitung der kontaktbehafteten Datenkommunikation 16 zunächst unterbrochen und anschließend mit Hilfe von Verlängerungsanfragen 21 aufrecht erhalten, um die kontaktlose Datenkommunikation 19 quasi parallel abarbeiten zu können. Das Verfahren läuft an sich analog zu den oben beschriebenen Schritte S2 bis S10 in Figur 1 ab, nur der Schritt S1 ist gedanklich zu streichen. Nach dem Empfang der Kopfdaten 17a als erstem Verfahrensschritt wird die laufende kontaktbehaftete Datenkommunikation 16 unterbrochen durch eine neu begonnene kontaktlose Datenkommunikation 19. Eine WWT wird für die kontaktbehaftete Datenkommunikation 16 überwacht und gegebenenfalls einmal oder mehrfach durch eine Verlängerungsanfrage 21 verlängert, bis die kontaktlose Datenkommunikation 19 abgeschlossen ist. Danach kann mit der unterbrochenen kontaktbehafteten Datenkommunikation 16 fortgefahren werden.

In einer zweiten Variante, die in der unteren Hälfte von Fig. 2 dargestellt ist, wird zunächst die kontaktbehaftete Datenkommunikation 16 in einem Betriebszustand (OPERATING STATE), in dem gleichzeitig die kontaktlose Schnittstelle 4 durch die Sequenzialisierungseinrichtung 6 gesperrt ist, über das Senden von Kopfdaten 17a einer Kommando-APDU 17 (Schritt S21), den Austausch von Nutzdaten 17b, 18a (Schritt S22) und das Versenden von Schlussdaten 18b einer Antwort-APDU (Schritt S23) durchgeführt. Die kontaktlose Datenkommunikation 19 wird während des Betriebszustands der kontaktbehafteten Schnittstelleneinrichtung 2,3 blockiert bzw. verzögert. Das heißt, dass während des Betriebszustands der kontaktbehafteten Schnittstelleneinrichtung 2, 3 Interrupts, die an der kontaktlosen Schnittstelleneinrichtung 4, 5 aufgrund einer einsetzenden kontaktlosen Datenkommunikation 19 erzeugt werden, z.B. weil die kontaktlose Schnittstelle 4 in das Magnetfeld einer Funkkommunikationseinheit 13 eintritt, ignoriert und nicht bearbeitet werden.

Da die Funkkommunikationseinheit 13 bei einer gesperrten kontaktlosen Schnittstelleneinheit 4, 5 für eine bestimmte Zeit ein Polling durchführt, also wiederholte Kontaktaufnahmeversuche unternimmt, kann der Beginn der kontaktlosen Datenkommunikation 19 bis zur Beendigung des Betriebszustands verschoben werden. Nach Senden der Schlussdaten 18b an die externe Kommunikationseinheit 12 überführt die Sequenzialisierungseinrichtung 6 die kontaktbehaftete Schnittstelleeinrichtung 2, 3 von dem Betriebszustand in einen Ruhezustand (IDLE STATE), in dem gleichzeitig die kontaktlose Schnittstelleneinheit 4, 5 wieder freigeschaltet wird, so dass bei Anliegen eines entsprechenden Magnetfelds an der kontaktlosen Schnittstelle 4 (bzw. mit dem Empfang eines RIQx-Signals von der externen Funkkommunikationseinheit 13) die kontaktlose Datenkommunikation 19 in Schritt S24 begonnen und durchgeführt werden kann. Nach Beendigung der kontaktlosen Datenkommunikation 19 wird durch die Sequenzialisierungseinrichtung 6 wieder wird der Betriebszustand der kontaktbehafteten Schnittstelleneinrichtung 2, 3 eingeschaltet und es kann eine weitere kontaktbehaftete Datenkommunikation 16 stattfinden.

Mit den in Bezug auf Fig. 2 beschriebenen sich ergänzenden Sequenzialisierungsverfahren wird eine alternierende und verlustfreie Bearbeitung der konkurrierenden Datenkommunikationen 16,19 über die Schnittstellen 2,4 der SIM-Karte 1 und damit ein einfaches Multitasking für das T=0 Protokoll realisiert.

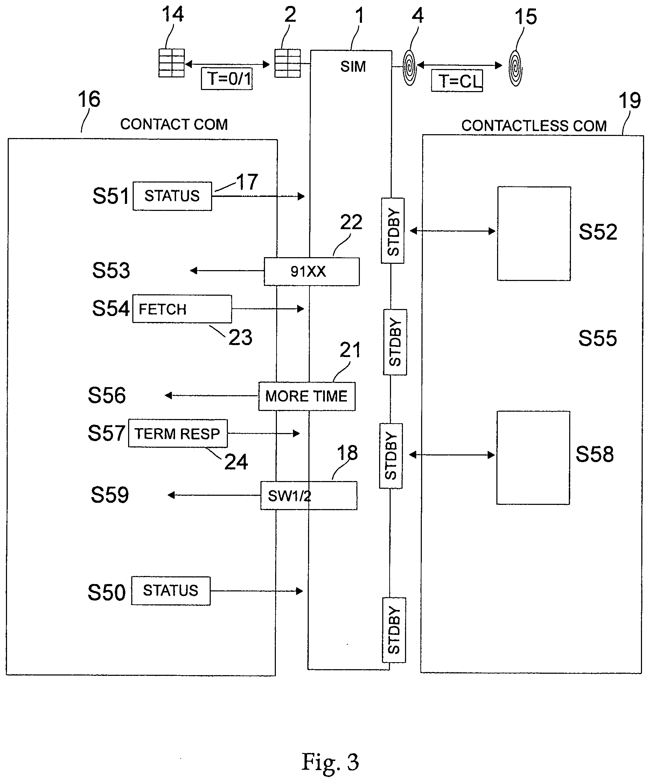

Figur 3 zeigt schließlich mit den Schritten S51 bis S59 eine weitere Ausführungsform einer Sequenzialisierung an sich konkurrierender Datenkommunikationen 16,19 für den Fall, dass eine kontaktlose Datenkommunikation 19 während einer bereits laufenden kontaktbehafteten Datenkommunikation 16 einsetzt. Im Gegensatz zu den bisher gezeigten Ansätzen erfolgt die Sequenzialisierung jedoch nicht allein durch die SIM-Karte, sondern zumindest teilweise in Zusammenarbeit mit der externen Kommunikationseinheiten 12.

Die laufende kontaktbehaftete Datenkommunikation 16 wird hierzu von der Sequenzialisierungseinrichtung 6 zu verschiedenen Zeitpunkten temporär unterbrochen und eine Empfangsbereitschaft (STANDBY) der kontaktlosen Schnittstelle 4 hergestellt, um etwaige beginnende kontaktlose Datenkommunikationen 19 erkennen und bearbeiten zu können. Beispielsweise kann nach dem Senden einer C-APDU 17 von der externen Kommunikationseinheit 12 an die kontaktbehaftete Schnittstelleneinrichtung 2,3 in Schritt S51 und vor dem Rücksenden einer entsprechenden R-APDU 18 in Schritt S53 eine temporäre Empfangsbereitschaft der kontaktlosen Schnittstelleneinrichtung 2, 3, eingerichtet werden (Schritt S52), um eine während dieser Zeitspanne beginnende etwaige kontaktlose Datenkommunikation 19 bearbeiten zu können.

Bei SIM-Mobilfunkkarten 1 stehen im Rahmen des "SIM-Application-Toolkit" ein spezieller Kommandosatz zur Verfügung, der einer Mobilfunkkarte 1 proaktive Kommandos bereitstellt, die das herkömmliche Master/Slave-Verhältrus zwischen einer SIM-Mobilfunkkarte 1 und einer Kommunikationseinheit 12,13 umgehen und es der SIM-Karte 1 gestatten, ihrerseits Anweisungen an die Kommunikationseinheit 12 zu richten, die von dieser zu beantworten sind. Hierzu eignen sich insbesondere die Kommandos STATUS, FETCH und TERMINAL RESPONSE. Mit Hilfe des Kommandos STATUS fragt die Kommunikationseinheit 12 an, ob die SIM-Karte 1 proaktive Kommandos absetzen möchte. Die Karte antwortet mit einem Statuscode "91XX", falls Sie selbst ein Kommando senden möchte. Durch Übertragen des FETCH-Kommandos holt die externe Kommunikationseinheit 12 dann eine von ihr zu bearbeitende Anweisung bei der SIM-Karte 1 ab, während mittels des TERMINAL-RESPONSE-Kommandos (TERM RESP) die entsprechende Antwort der externen Kommunikationseinheit 12 auf die zuvor abgeholte Anweisung an die SIM-Karte 1 übergeben wird. Durch Verwendung der proaktiven Kommandos des SIM-Application-Toolkit kann, z.B. veranlasst durch die Synchronisationseinrichtung 6, eine Empfangsbereitschaft (STANDBY) an der kontaktlosen Schnittstelle 4 gezielt mehrfach hintereinander erreicht werden.

Die Antwort 22 in Form des Statuscodes "91XX" der SIM-Karte 1 in Schritt S53 veranlasst die externe Kommunikationseinheit 12, eine Anweisung bei der SIM-Karte 1 mit einem FETCH-Kommando 23 abzuholen (Schritt S54). Die SIM-Karte 1 nutzt die ihr zugestandene Bearbeitungszeit wiederum für eine Empfangsbereitschaftsphase S55 der kontaktlosen Schnittstelle 4.

Als von der externen Konmmunikationseinheit 12 abzuholende Anweisung kann nun vorzugsweise die "MORE-TIME"-Anweisung verwendet werden, mit der die SIM-Karte 1 bei der externen Kommunikationseinheit 12 weitere Zeit für die Bearbeitung von Aufgaben anfordert. Im vorliegenden Falle fordert sie durch den Schritt des Sendens S56 einer MORE-TIME-Anfrage 21 die Zeit für eine weitere Empfangsbereitschaftsphase (STDBY) zur Bearbeitung der kontaktlosen Datenkommunikation 19 an. Die MORE-TIME-Anweisung 21 der SIM-Karte 1 wird von der externen Kommunikationseinheit 12 mit einem TERMINAL-RESPONSE-Kommando gewährt (Schritt S57). Sollte nun in der weiteren Empfangsbereitschaftsphase eine kontaktlose Datenkommunikation 19 beginnen (Schritt S58), so kann die SIM-Karte 1 weitere MORE-TIME-Anweisungen senden. Vorzugsweise wird die Empfangsbereitschaft derart bis zum Abschluss der kontaktlosen Datenkommunikation 19 verlängert. Die SIM-Karte 1 kann in Schritt S59 als Antwort 18 beispielsweise einen Statuscode "9000" über die kontaktbehaftete Schnittstelleneinrichtung 2, 3 an die Kommunikationseinheit 12 senden.

Während der proaktiven Phase kann die Sequenzialisierungseinrichtung 6 jeweils vor dem Senden S53, S56, S59 einer Antwort die kontaktlose Schnittstelleneinrichtung 4, 5 freischalten/aktivieren, um eine etwaige kontaktlose Datenkommunikation 19 zu erkennen und bearbeiten zu können. Nach dem Senden der Antwort wird die kontaktbehaftete Schnittstelleneinrichtung 2, 3 wieder aktiviert.

Mit einem Schritt S50 des Sendens eines weiteren STATUS-Kommandos beginnt dann möglicherweise eine weitere Datenkommunikation 16 zwischen der Kommunikationseinheit 12 und der SIM-Karte 1 über die kontaktbehaftete Schnittstelleneinrichtung 2,3.

Das Zeitintervall zwischen dem Empfang zweier STATUS-Kommandos bzw. zwischen der letzten Antwort der SIM-Karte 1 einer proaktiven Phase und dem nächsten STATUS-Kommando sollte in geeigneter Weise gewählt werden. In der Regel wird das Zeitintervall zwischen der SIM-Karte 1 und der Kommunikationseinheit 12 in einer Initialisierungsphase der kontaktbehafteten Kommunikation 16 ausgehandelt. Die Kommunikationseinheit 12 sendet STATUS-Kommandos dann entsprechend in dem vereinbarten Zeitintervall. Aufgrund der nötigen schnellen Reaktionszeiten für die kontaktlose Datenkommunikation 19 sollte das Zeitintervall so klein wie möglich sein.

Aus der Sicht der Kommunikationseinheit 12 wäre dagegen eher ein möglichst großes Zeitintervall sinnvoll, beispielsweise um Strom zu sparen oder Zeiten zu vermeiden in denen die Kommunikationseinheit 12 auf eine Anweisung der SIM-Karte 1 wartet. Daher soll das Zeitintervall (temporär) verkürzt werden können. Als Auslöser für die Verkürzung kann beispielsweise eine Eingabe des Benutzers auf der Kommunikationseinheit 12 verwendet werden, mit welcher der Benutzer eine Freigabe/Aktivierung der kontaktlosen Kommunikationsschnittstelle 4, 5, vorzugsweise für einen begrenzten Zeitraum von beispielsweise einer Minute, anfordert. Als Auslöser kann aber ebenso das Erkennen eines kontaktlosen Datenkommunikationsfeldes oder das Erkennen eines Versuchs zum Aufbau der kontaktlosen Datenkommunikation dienen, die vorzugsweise durch die SIM-Karte 1 erkannt und der Kommunikationseinheit 12 mitgeteilt wird, beispielsweise in der Form eines Statuscode einer Antwort 18.

Der Benutzer kann die kontaktlose Schnittstelleneinrichtung 4, 5 dann für einen bestimmten Zeitraum, zum Beispiel eine Minute, über das SIM-Application-Toolkit der Mobilfunkkarte aktivieren, so dass während dieses Zeitraums die Sequenzialisierungseinrichtung 6 über Zyklen von proaktiven Kommandos die Empfangsbereitschaft der kontaktlosen Schnittstelleneinrichtung 4, 5 herstellt. Die Sequenzialisierungseinrichtung 6 bzw. die kontaktlose Schnittstelleneinrichtung 4, 5 - gegebenenfalls nach einer Initialisierung der kontaktlosen Schnittstelle 4 - wartet für eine bestimmte Zeitspanne (z.B. zwei Sekunden) auf eine an der kontaktlosen Schnittstelle 4 beginnende kontaktlose Datenkommunikation 19. Falls innerhalb dieser Zeitspanne eine kontaktlose Datenkommunikation 19 beginnt, sorgt die Sequenzialisierungseinrichtung 6 dafür, dass diese zu Ende geführt werden kann.

Hierbei ist es vorteilhaft, dass nach einer kontaktlosen Datenkommunikation 19 sofort ein Nutzerdialog über die kontaktbehaftete Schnittstelle 2 gestartet werden kann. Auch ist es möglich, anstatt der "MORE TIME"-Anweisung andere proaktive Kommandos zu verwenden, bei denen zusätzlich auf eine an der kontaktlosen Schnittstelle 4 einsetzende kontaktlose Datenkommunikation 19 gewartet wird. Statt des oben beschriebenen proaktiven Betriebs können auch ein oder mehrere spezielle APDUs von der externen Kommunikationseinheit 12 an die SIM-Karte 1 geschickt werden, die für eine definierte Zeit auf eine kontaktlose Datenkommunikation 19 an der kontaktlosen Schnittstelle 4 warten. Ebenso ist es möglich, dass die externe Kommunikationseinheit 12, die in der Regel ein Mobilfunkendgerät ist, ein zyklisches Polling mit geeigneten APDUs betreibt, damit der Benutzer der Mobilfunkkarte 1 keine Menüauswahl in dem SIM- Application-Toolkit vornehmen muss, um die kontaktlose Schnittstelleneinrichtung 4, 5 zu aktivieren.

Bei den oben beschriebenen Ausführungsformen ist zu berücksichtigen, dass das Auftreten eines Magnetfeldes an der kontaktlosen Schnittstelle 4 vorzugsweise nicht unbedingt bedeutet, dass eine kontaktlose Datenkommunikation 19 tatsächlich erfolgen wird. Es kann deshalb sinnvoll sein, den Beginn einer kontaktlosen Datenkommunikation 19 als den Zeitpunkt zu definieren, an dem die SIM-Karte 1 von der externen Funkkommunikationseinheit 13 selektiert wird. Bis zu diesem Zeitpunkt kann insbesondere das Empfangen und Zwischenspeichern von Daten im Rahmen der kontaktbehafteten Datenkommunikation 16 durch die kontaktbehaftete Schnittstelleneinrichtung 2, 3 und eine Initialisierung und Antikollision an der kontaktlosen Schnittstelle 4 parallel ablaufen.

Ebenso ist eine kontaktlose Datenkommunikation 19, die auch aus mehreren APDUs bestehen kann, vorzugsweise "kurz", dass heißt, dass sie bei zwei aufeinander folgenden kontaktbehafteten Datenkommunikationen 16 zwischen deren APDUs geschoben werden kann. In diesem Zusammenhang kann es sinnvoll sein, die Länge einer kontaktlosen Datenkommunikation 19 zu überwachen und gegebenenfalls abzubrechen, falls sie zu lange dauert. Bei längeren kontaktlosen Datenkommunikationen 19 kann es sinnvoll sein, die jeweiligen APDUs der konkurrierenden kontaktbehafteten und kontaktlosen Datenkommunikationen 16,19 abwechselnd abzuarbeiten. Dazu ist jedoch auch ein an der kontaktlosen Schnittstelleneinrichtung 4, 5 einzusetzender Verzögerungsmechanismus nötig. Da die Protokollmechanismen des kontaktlosen T=CL-Protokolls ähnlich mit denjenigen des kontaktbehafteten T=1-Protokolls sind, kann auch bei einer kontaktlosen Datenkommunikation 19 ein Überwachen oder Verlängern der Antwortzeit durch WTX-Anfragen und/oder das wiederholte Versenden/Empfangen von ignorierten und/ oder verlorenen Datenblöcken eingesetzt werden.

Vor einer Unterbrechung der Bearbeitung einer Datenkommunikation zugunsten der Bearbeitung einer anderen Datenkommunikation wird geprüft, ob die Datenkommunikation überhaupt unterbrochen werden darf. So kann beispielsweise definiert sein, dass nur die kontaktbehaftete Datenkommunikation unterbrochen werden darf. Auf der SIM-Karte 1 gespeicherte Parameter für die Sequenzialisierung können diese Information enthalten, welche Art der Datenkommunikation unterbrochen werden darf. Ferner kann in den zu prüfenden Parametern unterschieden werden, ob die Datenkommunikation als initiale Datenkommunikation zugunsten einer zweiten Datenkommunikation oder als zweite Datenkommunikation zugunsten einer initialen Datenkommunikation unterbrochen werden darf. Die zu prüfenden Parameter können kartenspezifisch, anwendungsspezifisch und/ oder kommandospezifisch gestaltet sein. Somit hätte beispielsweise der Anbieter einer Anwendung die Möglichkeit ohne eine Änderung der Steuerungssoftware in der SIM-Karte das Verhalten der SIM-Karte seinen Sicherheitsanforderungen anzupassen.

Zudem kann geprüft werden, ob eine Unterbrechung einer Datenkommunikation überhaupt nötig ist. Wenn die zu erwartende Restlaufzeit zur Bearbeitung einer Datenkommunikation einen Grenzwert unterschreitet, kann die Datenkommunikation fortgeführt werden, ohne dass eine Unterbrechung nötig ist. Die Restlaufzeit kann aus einer gemessenen Kommandolaufzeit und einer erwarteten Solllaufzeit für das Kommando errechnet werden. Der Grenzwert kann als Parameter für die Sequenzialisierung wiederum kartenspezifisch, anwendungsspezifisch und/ oder kommandospezifisch gestaltet sein.

Die Notwendigkeit und/ oder Zulässigkeit der Unterbrechung wie beschrieben zu prüfen, ist eine auf alle Ausführungsformen der Erfindung anwendbare Option.

## Patentansprüche

1. Verfahren in einem Sicherheitsmodul (1) mit einer ersten Schnittstelle (2) und einer zweiten Schnittstelle (4) eines portablen Datenträgers, mit den folgenden Schritten:
- Empfangen (S51; S54; S57) von ersten Daten (17; 23; 24) über die erste Schnittstelle (4);
- Auswerten zumindest der empfangenen Daten (17; 23; 24);
- Senden einer Antwort (22; 21; 18) auf die empfangenen Daten (17; 23; 24) über die erste Schnittstelle (4);
**dadurch gekennzeichnet, dass**
abhängig von dem Auswertungsergebnis in dem Schritt des Auswertens eine Empfangsbereitschaftsphase für den Empfang von Daten über die zweite Schnittstelle (2) ausgeführt (S52; S55; S58) oder nicht ausgeführt wird; und wobei das Senden der Antwort (22; 21;18) auf die empfangenen Daten (17; 23; 24) über die erste Schnittstelle (4) nach dem Ausführen der Empfangsbereitschaftsphase erfolgt.

2. Verfahren nach Anspruch 1, **gekennzeichnet durch** Empfangen von zweiten Daten über die zweite Schnittstelle (4) in der ausgeführten Phase.

3. Verfahren nach Anspruch 1 oder 2, **dadurch gekennzeichnet, dass** die gesendete Antwort (21) als Empfangsbereitschaftsanforderung den Empfang von Daten (24) anfordert, welche das Ausführen einer weiteren Empfangsbereitschaftsphase (S58) erlauben.

4. Verfahren nach einem der Ansprüche 1 bis 3, **dadurch gekennzeichnet, dass** in dem Schritt des Auswertens die ersten Daten (17; 23; 24) als vorbestimmte Daten erkannt werden, die eine Empfangsbereitschaftsphase für die zweite Schnittstelle (2) auslösen können.

5. Verfahren nach einem der Ansprüche 1 bis 4, **dadurch gekennzeichnet, dass** in dem Schritt des Auswertens zusätzliche, vorzugsweise auf das Sicherheitsmodul und/ oder dessen Betriebszustand bezogene, Informationen ausgewertet werden.

6. Verfahren nach einem der Ansprüche 1 bis 5, **gekennzeichnet durch** Unterbrechen einer kontaktbehafteten Datenkommunikation über die erste Schnittstelle (2) durch die Empfangsbereitschaftsphase mit einem Warten auf den Beginn oder Ausführen einer kontaktlosen Datenkommunikation (19) über die zweite Schnittstelle (4).

7. Verfahren nach einem der Anspruch 6, **gekennzeichnet durch** Ausführen der kontaktlosen Datenkommunikation (19) nach Unterbrechen der kontaktbehafteten Datenkommunikation (16), falls die kontaktlose Datenkommunikation (19) innerhalb der Empfangsbereitschaftsphase beginnt.

8. Verfahren nach einem der Ansprüche 1 bis 7, **gekennzeichnet durch** Anfordern von Empfangsbereitschaftszeit durch das Sicherheitsmodul (1) bei einer externen Kommunikationseinheit (12), welche die empfangenen ersten Daten gesendet hat.

9. Verfahren nach Anspruch 8, **gekennzeichnet durch** Verlängern der Empfangsbereitschaftszeit bis eine, vorzugsweise kontaktlose, Datenkommunikation (19) über die zweite Schnittstelle vollständig durchgeführt ist.

10. Verfahren nach einem der Ansprüche 1 bis 9, **dadurch gekennzeichnet, dass** das Sicherheitsmodul als Antwort eine Anforderung einer Wartezeitverlängerung (WTX, Null-Byte) sendet.

11. Verfahren nach einem der Ansprüche 1 bis 10, **dadurch gekennzeichnet, dass** das Sicherheitsmodul als Antwort (21, 22) eine Anforderung einer weiteren Empfangsbereitschaftsphase sendet.

12. Verfahren nach einem der Ansprüche 1 bis 11, **dadurch gekennzeichnet, dass** eine kontaktbehaftete Datenkommunikation (16) gemäß dem T=0- oder dem T=1-Protokoll durchgeführt wird.

13. Sicherheitsmodul (1), umfassend einen Prozessor (7), eine erste Schnittstelle (2/4) umfassende erste Schnittstelleneinrichtung (2,3/4,5) und eine zweite Schnittstelle (4/2) umfassende zweite Schnittstelleneinrichtung (4, 5/2, 3), angepasst zur Ausführung eines Verfahrens nach einem der Ansprüche 1 bis 12.

14. Sicherheitsmodul (1) nach Anspruch 13, **dadurch gekennzeichnet, dass** das Sicherheitsmodul (1) eine Chipkarte, eine sichere Multimediakarte oder eine Mobilfunkkarte ist.

15. System aus einem Endgerät und einem Sicherheitsmodul (1) nach Anspruch 13, **dadurch gekennzeichnet, dass** das Sicherheitsmodul ein fest in ein Endgerät integriertes Sicherheitsmodul ist.

## Claims

1. A method in a security module (1) with a first interface (2) and a second interface (4) of a portable data carrier, with the following steps of:
- receiving (S51; S54; S57) first data (17; 23; 24) via the first interface (4);
- evaluating at least the received data (17; 23; 24);
- sending a response (22; 21; 18) to the received data (17; 23; 24) via the first interface (4);
**characterized in that**
in dependence on the evaluation result in the step of evaluating, a ready-to-receive phase for receiving data via the second interface (2) is executed (S52; S55; S58) or not executed; and wherein the sending of the response (22; 21; 18) to the received data (17; 23; 24) is effected via the first interface (4) after the execution of the ready-to-receive phase.

2. The method according to claim 1, **characterized by** receiving second data via the second interface (4) in the executed phase.

3. The method according to claim 1 or 2, **characterized in that** the sent response (21) as a ready-to-receive request requests the receipt of data (24) which permit the execution of a further ready-to-receive phase (S58).

4. The method according to any one of claims 1 to 3, **characterized in that** in the step of evaluating, the first data (17; 23; 24) are detected as predetermined data which can trigger a ready-to-receive phase for the second interface (2).

5. The method according to any one of claims 1 to 4, **characterized in that** in the step of evaluating, additional information is evaluated which is preferably related to the security module and/or its operating state.

6. The method according to any one of claims 1 to 5, **characterized by** interrupting a contact-type data communication via the first interface (2) by the ready-to-receive phase with a wait for the start or the execution of a contactless data communication (19) via the second interface (4).

7. The method according to claim 6, **characterized by** executing the contactless data communication (19) after interruption of the contact-type data communication (16), if the contactless data communication (19) starts within the ready-to-receive phase.

8. The method according to any one of claims 1 to 7, **characterized by** requesting ready-to-receive time by the security module (1) from an external communication unit (12) which has sent the received first data.

9. The method according to claim 8, **characterized by** extending the ready-to-receive time until a data communication (19), preferably a contactless one, via the second interface has been carried out completely.

10. The method according to any one of claims 1 to 9, **characterized in that** the security module sends a request for a waiting time extension (WTX, zero bytes) in response.

11. The method according to any one of claims 1 to 10, **characterized in that** the security module sends a request for a further ready-to-receive phase in response (21, 22).

12. The method according to any one of claims 1 to 11, **characterized in that** a contact-type data communication (16) is carried out in accordance with the T=0 or the T=1 protocol.

13. A security module (1) comprising a processor (7), a first interface device (2, 3/ 4, 5) comprising a first interface (2/ 4) and a second interface device (4, 5/ 2, 3) comprising a second interface (4/ 2) adapted to execute a method according to any one of claims 1 to 12.

14. The security module (1) according to claim 13, **characterized in that** the security module (1) is a chip card, a secure multimedia card or a mobile communication card.

15. A system of a terminal device and a security module (1) according to claim 13, **characterized in that** the security module is a security module permanently integrated in a terminal device.

## Revendications

1. Procédé dans un module de sécurité (1) ayant une première interface (2) et une deuxième interface (4), d'un support de données portable, comprenant les étapes suivantes :
- réception (S51; S54; S57) de premières données (17; 23; 24) par l'intermédiaire de la première interface (4) ;
- évaluation d'au moins les données (17; 23; 24) reçues ;
- envoi d'une réponse (22; 21; 18) aux données (17; 23; 24) reçues, par l'intermédiaire de la première interface (4) ;
**caractérisé en ce que**
en fonction du résultat de l'évaluation lors de l'étape de l'évaluation, une phase de régime de réception pour la réception de données par l'intermédiaire de la deuxième interface (2) est exécutée (S52; S55; S58) ou n'est pas exécutée ; et cependant que l'envoi de la réponse (22; 21; 18) aux données (17; 23; 24) reçues est effectué par l'intermédiaire de la première interface (4), après l'exécution de la phase de régime de réception.

2. Procédé selon la revendication 1, **caractérisé par** la réception de deuxièmes données par l'intermédiaire de la deuxième interface (4), durant la phase exécutée.

3. Procédé selon la revendication 1 ou 2, **caractérisé en ce que** la réponse (21) envoyée demande, en tant que demande de régime de réception, la réception de données (24) qui permettent l'exécution d'une autre phase de régime de réception (S58).

4. Procédé selon une des revendications de 1 à 3, **caractérisé en ce que,** lors de l'étape de l'évaluation, les premières données (17; 23; 24) sont reconnues en tant que données prédéterminées qui peuvent engendrer une phase de régime de réception pour la deuxième interface (2).

5. Procédé selon une des revendications de 1 à 4, **caractérisé en ce que,** lors de l'étape de l'évaluation, des informations supplémentaires, de préférence relatives au module de sécurité et/ou à son état de fonctionnement, sont évaluées.

6. Procédé selon une des revendications de 1 à 5, **caractérisé par** une interruption d'une communication de données avec contact par l'intermédiaire de la première interface (2), par la phase de régime de réception, avec une attente du commencement ou une exécution d'une communication de données sans contact (19) par l'intermédiaire de la deuxième interface (4).

7. Procédé selon une des revendications 6, **caractérisé par** une exécution de la communication de données sans contact (19) après interruption de la communication de données avec contact (16) si la communication de données sans contact (19) commence durant la
phase de régime de réception.

8. Procédé selon une des revendications de 1 à 7, **caractérisé par** une demande de temps de régime de réception par le module de sécurité (1) auprès d'une unité externe de communication (12) qui a envoyé les premières données reçues.

9. Procédé selon la revendication 8, **caractérisé par** la prolongation du temps de régime de réception jusqu'à ce qu'une communication de données (19), de préférence sans contact, soit complètement accomplie par l'intermédiaire de la deuxième interface.

10. Procédé selon une des revendications de 1 à 9, **caractérisé en ce que** le module de sécurité, en tant que réponse, envoie une demande de prolongation du temps d'attente (WTX, zéro-octet).

11. Procédé selon une des revendications de 1 à 10, **caractérisé en ce que** le module de sécurité, en tant que réponse (21, 22), envoie une demande d'une autre phase de régime de réception.

12. Procédé selon une des revendications de 1 à 11, **caractérisé en ce qu'**une communication de données avec contact (16) est accomplie suivant le protocole T=0 ou T=1.

13. Module de sécurité (1) comprenant un processeur (7), un premier dispositif d'interfaces (2, 3/4, 5) comprenant une première interface (2/4) et un deuxième dispositif d'interfaces (4, 5/2, 3) comprenant une deuxième interface (4/2), adapté à l'exécution d'un procédé selon une des revendications de 1 à 12.

14. Module de sécurité (1) selon la revendication 13, **caractérisé en ce que** le module de sécurité (1) est une carte à puce, une carte de multimédia sécurisée ou une carte de téléphonie mobile.

15. Système consistant en un terminal et un module de sécurité (1) selon la revendication 13, **caractérisé en ce que** le module de sécurité est un module de sécurité intégré à demeure dans un terminal.
